# EUROPÄISCHE PATENTSCHRIFT

(11) **EP 2 026 047 B1**
(45) Veröffentlichungstag und Bekanntmachung des Hinweises auf die Patenterteilung: **23.05.2012**
(21) Anmeldenummer: 08013962.9
(22) Anmeldetag: 05.08.2008
(51) Int. Cl.: G01F 23/72, G01F 23/76

(54) **Flüssigkeitspegelsensor zur Messung des Ölstands in einem Kraftfahrzeug**
Fluid level sensor for measuring the oil level in a motor vehicle
Capteur de niveau de liquide pour la mesure du niveau d'huile dans un véhicule automobile

(30) Priorität: 11.08.2007 DE 102007037933
(43) Veröffentlichungstag der Anmeldung: 18.02.2009
(73) Patentinhaber: Hella KGaA Hueck & Co., 59552 Lippstadt (DE)
(72) Erfinder: Niemann, Thomas, 27753 Delmenhorst (DE); Knipper, Uwe, 28816 Stuhr (DE)
(74) Vertreter: Siekmann, Gunnar

(56) Entgegenhaltungen:
- US-B1- 6 557 412

## Beschreibung

Die Erfindung betrifft einen Flüssigkeitssensor mit einem höhenbewegbaren Schwimmer, wobei der Flüssigkeitssensor mindestens einen Magneten und mindestens einen Hallsensor aufweist, der auf ein sich änderndes Magnetfeld reagiert, wobei der Hallsensor und der Magnet in fester Ortsrelation zueinander angeordnet sind und der Flüssigkeitssensor mindestens ein gegenüber dem Hallsensor relativ bewegbares, das Magnetfeld beeinflußendes Element aufweist. Derartige Sensoren werden auch Niveau-Sensor genannt.

Flüssigkeitssensoren zur Messung des Ölstands in Kraftfahrzeugen sind bekannt. Dabei ist auf einem Leadframe ein vertikal ausgerichteter Schutzgasschalter vorgesehen, der von einem ringförmigen Schwimmer umgeben ist. Der Schwimmer weist einen eingebetteten Ringmagnet auf, der den Schutzgasschalter mit einem Magnetfeld beaufschlagt und diesen schaltet, wenn der Schwimmer aufschwimmt. Da der Schutzgaskontakt im Öl liegen muß, ist eine vergleichsweise aufwendige Dichtstrecke zum Leadframe innerhalb des Flansches notwendig. Auch die Gesamtkosten für die Erstellung dieses Flüssigkeitssensors mit Schutzgasschalter und Ringmagnet sind vergleichsweise hoch.

Ein gattungsgemäßer Flüssigkeitssensor mit einem höhenbeweglichen Schwimmer ist in der US 6,557,412 B1 offenbart. Der Flüssigkeitssensor weist einen Magneten und einen Hallsensor auf, die zusammen ortsfest auf einem ringartigen Führungselement angeordnet sind, in dessen Inneren ein höhenbeweglicher Schwimmer angeordnet ist. Dieser Schwimmer ist im Inneren des Rings geführt und weist magnetfeldbeeinflussende Elemente auf.

Ein weiterer Flüssigkeitssensor ist aus der DE 10 2004 028 337 A1 bekannt. Dort ist eine Füllstandsvorrichtung beschrieben, die ein programmierbares Hall-Element aufweist. In einem Schwimmer ist dabei ein Magnet angeordnet. Der Magnet ist in dieser Druckschrift auch als bipolar magnetisiertes Element bezeichnet.

Der Erfindung liegt die Aufgabe zugrunde, einen Flüssigkeitssensor der eingangs genannten Art zu schaffen, der besonders kostengünstig herstellbar ist.

Die Lösung dieser Aufgabe erfolgt mit einem Flüssigkeitssensor mit den Merkmalen des Patentanspruchs 1. Vorteilhafte Weiterbildungen der Erfindung sind in den Unteransprüchen beschrieben.

Bei einem Flüssigkeitssensor, insbesondere zum Einsatz im Motor eines Kraftfahrzeuges, mit einem höhenbeweglichen Schwimmer, wobei der Flüssigkeitssensor mindestens einen Magneten und mindestens einen Hallsensor aufweist, der auf ein sich änderndes Magnetfeld reagiert, ist erfindungswesentlich vorgesehen, daß der Hallsensor und der Magnet in fester Ortsrelation zueinander angeordnet sind und der Flüssigkeitssensor mindestens ein gegenüber dem Hallsensor relativ bewegbares, das Magnetfeld beeinflussendes Element aufweist.

Der Flüssigkeitssensor läßt sich durch die Verbindung bzw. Anordnung von Hallsensor und Magnet auf einem Element, auf dem Hallsensor und Magnet in fester Ortsrelation zueinander stehen, besonders einfach herstellen. Durch ein demgegenüber bewegbares Element, das das Magnetfeld beeinflußt, wird letztlich der Hallsensor beeinflußt und spricht auf die entsprechende relative Bewegung des Schwimmers an. Dabei ist es möglich, den Hallsensor und den Magneten entweder in dem feststehenden Teil des Flüssigkeitssensors oder alternativ auch im Schwimmer anzuordnen. Das Magnetfeld beeinflussende Element ist entsprechend in dem jeweils anderen Teil anzuordnen.

In einer bevorzugten Ausgestaltung der Erfindung sind der Hallsensor und der Magnet als ein Bauteil ausgebildet. Bevorzugt ist der Magnet im IC (integrierten Schaltkreis) des Hallsensors integriert. Dadurch kann der Magnet besonders kostengünstig realisiert werden. In einer bevorzugten Ausgestaltung der Erfindung ist der Hallsensor einschließlich des Magneten ortsfest in dem Flüssigkeitssensor, also in einem feststehenden Element des Flüssigkeitssensors, angeordnet. Dementsprechend ist das das Magnetfeld beeinflussende Element bevorzugt in dem Schwimmer angeordnet. Bei dieser Ausgestaltung ist die Kontaktierung des Hallsensors mit einem Flansch und einem im Flansch angeordneten Steckerabgang einfach möglich. Gegenüber dem Stand der Technik mit dem glasgemantelten Schutzgasschalter läßt sich der Hallsensor bzw. der Hall-IC auch wesentlich einfacher und kostengünstiger kontaktieren.

In einer bevorzugten Ausgestaltung weist der Schwimmer mehrere magnetfeldbeeinflussende Elemente auf. In einer Weiterbildung der Erfindung sind diese magnetfeldbeeinflussenden Elemente unterschiedlich ausgebildet. Unterschiedlich vor allem in dem Sinne, daß deren Bewegung am Hallsensor vorbei einen unterschiedlich starken und unterschiedlich detektierbaren Einfluß ausüben. Bevorzugt wird ein Element im unteren Randbereich des Schwimmers und mindestens ein weiteres Element am oberen Randbereich des Schwimmers angeordnet, so daß auf diese Weise die maximale Strecke erfaßt werden kann. In einer bevorzugten Ausgestaltung sind die magnetfeldbeeinflussenden Elemente als Metallringe ausgebildet. Dabei kann im unteren Endbereich des Schwimmers ein breiter Metallring eingebettet sein und im oberen Randbereich des Schwimmers ein schmaler Metallring verwendet werden. Denkbar sind auch Möglichkeiten mit drei, vier oder fünf Metallringen. Durch die unterschiedliche Beeinflussung des Magnetfeldes durch den oberen und den unteren Metallring, insbesondere Eisenring, wird eine Abhängigkeit des Schwimmerniveaus vom Ausgangssignal des Hallsensors erzeugt. Mit dem erfindungsgemäßen Sensor ist ein nachträgliches Einstellen der Minimumgrenze möglich. Im Gegensatz zum Stand der Technik muß das Niveau des Sensors nicht mechanisch, z.B. durch Unterlegscheiben, angepaßt werden.

Anstelle der unterschiedlichen Ringe kann auch ein sich konisch oder ein sich stufenförmig verbreiterndes Metallelement (insbesondere aus Eisen) verwendet werden, das beim Aufsteigen des Schwimmers eine kontinuierliche oder stufenförmige Änderung des Meßsignals hervorruft.

In einer anderen Ausgestaltung der Erfindung ist in dem Flüssigkeitssensor, insbesondere in dem integrierten Schaltkreis, in dem auch der Hallsensor integriert ist, ein Temperatursensor integriert. Durch die Berücksichtigung der Temperatur der zu messenden Flüssigkeit kann deren Auswirkung auf die Dichte und damit den Füllstand der Flüssigkeit berücksichtigt werden.

Ein weiterer Aspekt der Erfindung betrifft einen Motor mit einem Flüssigkeitssensor mit einem höhenbeweglichen Schwimmer, wobei der Flüssigkeitssensor mindestens einen Magneten und mindestens einen durch ein sich änderndes Magnetfeld schaltenden Schalter aufweist, wobei der Flüssigkeitssensor einen Hallsensor aufweist und der Hallsensor und der Magnet in fester Ortsrelation zueinander angeordnet sind. Weiterhin ist dabei vorgesehen, daß der Flüssigkeitssensor mindestens ein gegenüber dem Hallsensor relativ bewegbares, das Magnetfeld beeinflussendes Element aufweist.

Ein weiterer Aspekt der Erfindung betrifft ein motorbetriebenes Fahrzeug, insbesondere ein Kraftfahrzeug mit einem Motor, das einen solchen erfindungsgemäßen Flüssigkeitssensor aufweist.

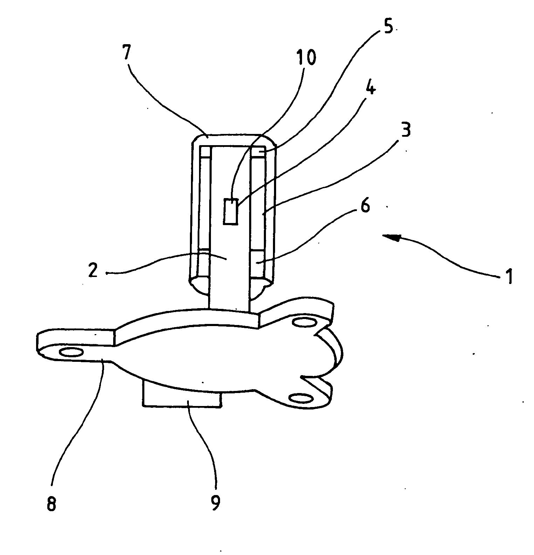

Nachfolgend wird die Erfindung anhand eines in der Zeichnung dargestellten Ausführungsbeispiels weiter erläutert. Die einzige Figur der Zeichnung zeigt in schematischer Darstellung einen auf einem Flansch montierten erfindungsgemäßen Flüssigkeitssensor.

Der Flüssigkeitssensor 1 weist ein zentrales stabförmiges Element 2, einen darin integrierten Hallsensor 4, einen darin integrierten Magneten 10, einen Schwimmer 3 und eine Kappe 7 auf. Der Schwimmer 3 ist ringartig ausgeführt und wird von dem zentralen stabförmigen Element 2 geführt bzw. schwimmt geführt an diesem auf. Das stabförmige Element 2 und der Schwimmer 3 sind von der Kappe 7 umgeben, die unten offen ist und auch im oberen Bereich eine Öffnung aufweist, so daß der Schwimmer ungehindert aufsteigen kann und Luft oder Flüssigkeit durch die obere Öffnung in der Kappe 7 entweichen kann. Der Schwimmer 3 weist an seinem unteren Endbereich einen breiten Metallring 6, insbesondere Eisenring, und an seinem oberen Bereich einen schmaleren Metallring 5, insbesondere Eisenring auf. Der Hallsensor 4 mit dem Magneten 10 ist als ein Bauteil, insbesondere als ein integrierter Schaltkreis ausgebildet und zentral in dem stabförmigen Element 2 angeordnet. In dem stabförmigen Element 2, das bevorzugt als Kunststoffspritzgußteil ausgebildet ist, sind die Anschlüsse für den integrierten Schaltkreis mit dem Hallsensor nach unten zu einem Flansch 8 geführt. In dem Flansch 8 ist auch ein Steckerabgang 9, durch den die elektrischen Anschlüsse abgegriffen werden können.

## Patentansprüche

1. Flüssigkeitssensor, insbesondere Ölstandssensor für Kraftfahrzeugmotoren, mit einem höhenbeweglichen Schwimmer (3), wobei der Flüssigkeitssensor (1) mindestens einen Magneten (10) und mindestens einen Hallsensor (4) aufweist, der auf ein sich änderndes Magnetfeld reagiert, wobei der Hallsensor und der Magnet in fester Ortsrelation zueinander angeordnet sind und der Flüssigkeitssensor (1) mindestens ein gegenüber dem Hallsensor (4) relativ bewegbares, das Magnetfeld beeinflußendes Element (5, 6) aufweist,
**dadurch gekennzeichnet,**
**daß** der Hallsensor (4) und der Magnet (10) in einem zentralen stabförmigen Element (2) angeordnet sind,
**daß** der Schwimmer (3) mit dem das Magnetfeld beeinflussenden Element (5, 6) ringartig ausgebildet ist und von dem zentralen stabförmigen Element (2) geführt ist.

2. Flüssigkeitssensor nach Anspruch 1, **dadurch gekennzeichnet, daß** der Hallsensor (4) und der Magnet (10) als ein Bauteil ausgebildet sind.

3. Flüssigkeitssensor nach einem der Ansprüche 1 oder 2, **dadurch gekennzeichnet, daß** der Hallsensor (4) ortsfest in dem Flüssigkeitssensor (1) angeordnet ist.

4. Flüssigkeitssensor nach einem der vorhergehenden Ansprüche, **dadurch gekennzeichnet, daß** der Schwimmer (3) mehrere magnetfeldbeeinflussende Elemente (5,6) aufweist.

5. Flüssigkeitssensor nach Anspruch 4, **dadurch gekennzeichnet, daß** die magnetfeldbeeinflussenden Elmente (5,6) unterschiedlich ausgebildet sind.

6. Flüssigkeitssensor nach einem der vorhergehenden Ansprüche, **dadurch gekennzeichnet, daß** das magnetfeldbeeinflussende Element ein Metallring (5,6) ist.

7. Flüssigkeitssensor nach einem der vorhergehenden Ansprüche, **dadurch gekennzeichnet, daß** der Flüssigkeitssensor (1) einen Temperatursensor aufweist.

8. Flüssigkeitssensor nach einem der vorhergehenden Ansprüche, **dadurch gekennzeichnet, daß** der Flüssigkeitssensor einen Flansch (8) mit Steckerabgang (9) aufweist.

9. Motor mit Flüssigkeitssensor nach einem der vorhergehenden Ansprüche.

10. Kraftfahrzeug mit einem Motor mit einem Flüssigkeitssensor nach einem der Ansprüche 1 bis 8.

## Claims

1. A liquid sensor, in particular an oil level sensor for motor vehicle engines, having a vertically movable float (3), wherein the liquid sensor (1) has at least one magnet (10) and at least one Hall sensor (4), which reacts to a changing magnetic field, wherein the Hall sensor and the magnet are arranged in a fixed spatial relation to each other and the liquid sensor (1) has at least one element (5, 6) which can be moved relative to the Hall sensor (4) and influences the magnetic field,
**characterised in that**
the Hall sensor (4) and the magnet (10) are arranged in a central, rod-shaped element (2),
the float (3) with the element (5, 6) which influences the magnetic field is ring-shaped and is guided by the central, rod-shaped element (2).

2. The liquid sensor according to claim 1, **characterised in that** the Hall sensor (4) and the magnet (10) are formed as one component.

3. The liquid sensor according to one of claims 1 or 2, **characterised in that** the Hall sensor (4) is arranged in a spatially fixed manner in the liquid sensor (1).

4. The liquid sensor according to one of the preceding claims, **characterised in that** the float (3) has a plurality of elements (5, 6) influencing the magnetic field.

5. The liquid sensor according to claim 4, **characterised in that** the elements (5, 6) influencing the magnetic field are formed differently.

6. The liquid sensor according to one of the preceding claims, **characterised in that** the element influencing the magnetic field is a metal ring (5, 6).

7. The liquid sensor according to one of the preceding claims, **characterised in that** the liquid sensor (1) has a temperature sensor.

8. The liquid sensor according to one of the preceding claims, **characterised in that** the liquid sensor has a flange (8) with a connector output (9).

9. An engine having a liquid sensor according to one of the preceding claims.

10. A motor vehicle having an engine with a liquid sensor according to one of claims 1 to 8.

## Revendications

1. Capteur de liquide, notamment capteur de niveau d'huile pour moteurs de véhicule automobile, comportant un flotteur (3) mobile en hauteur, dans lequel le capteur de liquide (1) présente au moins un aimant (10) et au moins un capteur à effet Hall (4), qui réagit à un champ magnétique variable, dans lequel le capteur à effet Hall et l'aimant sont disposés dans une relation spatiale fixe l'un par rapport à l'autre et le capteur de liquide (1) présente au moins un élément (5, 6) influençant le champ magnétique, déplaçable relativement au capteur à effet Hall (4),
**caractérisé en ce que**
le capteur à effet Hall (4) et l'aimant (10) sont disposés dans un élément central en forme de barre (2),
le flotteur (3) est réalisé annulairement avec l'élément (5, 6) influençant le champ magnétique et est guidé par l'élément central en forme de barre (2).

2. Capteur de liquide selon la revendication 1, **caractérisé en ce que** le capteur à effet Hall (4) et l'aimant (10) sont réalisés comme un composant.

3. Capteur de liquide selon une des revendications 1 ou 2, **caractérisé en ce que** le capteur à effet Hall (4) est disposé stationnairement dans le capteur de liquide (1).

4. Capteur de liquide selon une des revendications précédentes, **caractérisé en ce que** le flotteur (3) présente plusieurs éléments (5, 6) influençant le champ magnétique.

5. Capteur de liquide selon la revendication 4, **caractérisé en ce que** les éléments influençant le champ magnétique (5, 6) ont des configurations différentes.

6. Capteur de liquide selon une des revendications précédentes, **caractérisé en ce que** l'élément influençant le champ magnétique est une bague métallique (5, 6).

7. Capteur de liquide selon une des revendications précédentes, **caractérisé** e ce que le capteur de liquide (1) présente un capteur de température.

8. Capteur de liquide selon une des revendications précédentes, **caractérisé en ce que** le capteur de liquide présente une bride (8) avec sortie de fiche (9).

9. Moteur avec capteur de liquide selon une des revendications précédentes.

10. Véhicule automobile comportant un moteur avec un capteur de liquide selon une des revendications 1 à 8.
